# EUROPEAN PATENT APPLICATION

(11) **EP 2 837 634 A1**
(43) Date of publication of application: **18.02.2015**
(21) Application number: 13180041.9
(22) Date of filing: 12.08.2013
(51) Int. Cl.: C07F 7/02, C08F 210/16

(54) **Catalyst system for polymerisation of an olefin**

(71) Applicant: Saudi Basic Industries Corporation, Riyadh 11422 (SA)
(72) Inventor: Zuideveld, Martin Alexander, 6160 GA GELEEN (NL); Sainani, Jaiprakash Brijlal, Karnataka 562125 BANGALORE (IN); Vimalkumar, Mahendrabhai Patel, Karnataka 562125 BANGALORE (IN)
(74) Representative: Heijman, Renske Harriët

(57) **Abstract**

The present invention relates to a catalyst system comprising a procatalyst, a co-catalyst and an external electron donor, wherein the external electron donor comprises a compound having the structure according to Formula I:

Si (L)ₙ (OR¹)₄₋ₙ (Formula I),

wherein,
Si is a silicon atom with valency 4+;
O is an oxygen atom with valency 2- and O is bonded to Si via the silicon-oxygen bond;
n is 1, 2, 3 or 4;
R¹ is a selected from the group consisting of linear, branched and cyclic alkyl having at most 20 carbon atoms and aromatic substituted and unsubstituted hydrocarbyl having 6 to 20 carbon atoms;
L is a group represented by Formula II 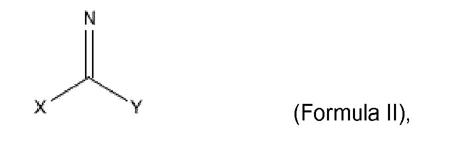 wherein,
L is bonded to the silicon atom via the nitrogen-silicon bond;
L has a single substituent on the nitrogen atom, where this single substituent is an imine carbon atom; and
X and Y are independently selected from the group consisting of a hydrogen atom; a heteroatom selected from group 13, 14, 15, 16 or 17 of the IUPAC Periodic Table of the Elements; a linear, branched and cyclic alkyl having at most 20 carbon atoms, optionally containing a heteroatom selected from group 13, 14, 15, 16 or 17 of the IUPAC Periodic

Table of the Elements and an aromatic substituted and unsubstituted hydrocarbyl having 6 to 20 carbon atoms, optionally containing a heteroatom selected from group 13, 14, 15, 16 or 17 of the IUPAC Periodic Table of the Elements.

## Description

The present invention relates to a catalyst system comprising a Ziegler-Natta type procatalyst, a co-catalyst and an external electron donor comprising a silicon compound. The invention also relates to a process for obtaining a polyolefin by applying said catalyst system and to a polyolefin obtainable by said process. The invention also relates to the use of said silicon compound as an external electron donor for polymerisation of an olefin.

Such silicon compounds are known in the prior art as being used as external electron donors in Ziegler-Natta catalyst systems for polymerization of olefins. The term "Ziegler-Natta" is known in the art and it typically refers to catalyst systems comprising a transition metal containing solid catalyst compound (also typically referred to as a procatalyst); an organometallic compound (also typically referred to as a co-catalyst) and optionally one or more electron donor compounds (e.g. external donors). The transition metal containing solid catalyst compound typically comprises a transition metal halide, i.e. titanium, chromium, vanadium halide supported on a metal or metalloid compound, such as magnesium chloride or silica. An overview of such catalyst types is for example given by T. Pullukat and R. Hoff in Catal. Rev. - Sci. Eng. 41, vol. 3 and 4, 389-438, 1999. The art presently recognizes a finite set of compounds suitable for use as external donors. Typical external donors known in the art (for instance as disclosed in documents WO2006/056338A1, EP1838741B1, US6395670B1, EP398698A1, WO96/32426A) are organosilicon compounds having general formula Si(OR^{a})₄₋ₙR^{b}ₙ, wherein n can be from 0 up to 2, and each R^{a} and R^{b}, independently, represents an alkyl or aryl group, optionally containing one or more hetero atoms for instance O, N, S or P, with, for instance, 1-20 carbon atoms; such as n-propyl trimethoxysilane, cyclohexyl methyldimethoxysilane, dicyclopentyl dimethoxysilane, di(iso-propyl) dimethoxysilane or di(iso-butyl) dimethoxysilane. Documents EP1538167 and EP1783145 disclose a Ziegler-Natta catalyst type comprising an organo-silicon compound as external donor that is represented by formula Si(OR^{c})₃(NR^{d}R^{e}), wherein R^{c} is a hydrocarbon group having 1 to 6 carbon atoms, R^{d} is a hydrocarbon group having 1 to 12 carbon atoms or hydrogen atom, and R^{e} is a hydrocarbon group having 1 to 12 carbon atoms used as an external electron donor. WO07134851A1 discloses a Ziegler-Natta catalyst and organo-silicon compounds of general formula Si(OR⁸)₄₋ₙ R⁹ₙ that are suitable as external donor, wherein n can be from 0 up to 4, preferably n is 1 or 2, and each R⁸ and R⁹, independently, represents an alkyl or aryl group, optionally containing one or more hetero atoms for instance O, N, S or P, with, for instance, 1-20 C-atoms, as defined above for R² and R³; such as n-propyl trimethoxysilane, cyclohexyl methyldimethoxysilane, dicyclopentyl dimethoxysilane, di(iso-propyl) dimethoxysilane or di(iso-butyl) dimethoxysilane.

However, by using such external electron donors known in the prior art, high formation of lumps in the powder polymer products within the reactor vessel and in the powder polymer product occurs. Polymer chunks not only hamper production, reducing reaction and production rates but also induce a greater amount of risks, such as injuries and fire while removing polymer chunks using normal maintenance practices. In addition, lumps in the product result in a non-uniform size product and lumps inside the reactor vessel can result in stoppage of the process requiring cleaning of the reactor vessel before the process can be continued. This can be quite costly and time consuming.

There is, therefore, an on-going need in industry for catalysts showing better or varied performance in polymerization of olefins without hampering production of polyolefins.

It is thus an object of the invention to provide an improved catalyst with high hydrogen and ethylene response that allows obtaining of a polyolefin, preferably a propylene-based polymer with high isotacticity, while minimizing the formation of polymer agglomerates and lumps in the reactor for making the polyolefin.

This object is achieved with a catalyst system for polymerization of an olefin comprising a Ziegler-Natta type procatalyst, a co-catalyst and an external electron donor, wherein the external electron donor has the structure according to Formula I:

Si (L)ₙ (OR¹)₄₋ₙ (Formula I),

wherein,
Si is a silicon atom with valency 4+;
O is an oxygen atom with valency 2- and O is bonded to Si via a silicon-oxygen bond;
n is 1, 2, 3 or 4;
R¹ is selected from the group consisting of linear, branched and cyclic alkyl having at most 20 carbon atoms and aromatic substituted and unsubstituted hydrocarbyl having 6 to 20 carbon atoms; and
L is a group represented by Formula II 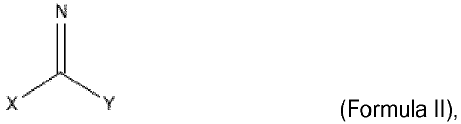 wherein,
L is bonded to the silicon atom via a nitrogen-silicon bond;
L has a single substituent on the nitrogen atom, where this single substituent is an imine carbon atom; and
X and Y are each independently selected from the group consisting of:
a) a hydrogen atom;
b) a group comprising a heteroatom selected from group 13, 14, 15, 16 or 17 of the IUPAC Periodic Table of the Elements, through which X and Y are each independently bonded to the imine carbon atom of Formula II, wherein the heteroatom is substituted with a group consisting of a linear, branched and cyclic alkyl having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl having 6 to 20 carbon atoms, optionally containing a heteroatom selected from group 13, 14, 15, 16 or 17 of the IUPAC Periodic Table of the Elements;
c) a linear, branched and cyclic alkyl having at most 20 carbon atoms, optionally containing a heteroatom selected from group 13, 14, 15, 16 or 17 of the IUPAC Periodic Table of the Elements; and
d) an aromatic substituted and unsubstituted hydrocarbyl having 6 to 20 carbon atoms, optionally containing a heteroatom selected from group 13, 14, 15, 16 or 17 of the IUPAC Periodic Table of the Elements.

The external electron donor according to the present invention exhibits high compatibility with Ziegler-Natta type procatalyst compositions and contribute to high catalyst activity, high hydrogen response and high ethylene response when combined with the procatalyst and the co-catalyst, while minimizing the formation of polymer agglomerates or lumps in the reactor for making polyolefins, particularly polypropylene. In addition, the external donors according to the present invention produce polyolefins with high isotacticity and high melt flow rates when used in Ziegler-Natta catalyst systems. Furthermore, the catalyst system according to the present invention comprising the specific external donor according to Formula I allows obtaining of propylene-ethylene copolymers, which have a high isotacticity and high melt flow rate, while the catalyst system exhibits a high hydrogen and ethylene response, and in the same time minimizing formation of lumps in the reactor. Moreover, by using the catalyst system according to the present invention comprising the special external donor of Formula (I), propylene-ethylene random copolymers having a more random distribution of the ethylene comonomer in the polymer chain can be obtained. Also, the rubber content in a heterophasic polypropylene composition may be increased by using the catalyst system according to the invention.

As used herein, an external electron-donating compound or an external electron donor or simply external donor is a compound added independent of procatalyst formation and contains at least one functional group that is capable of donating a pair of electrons to a metal atom. The main function of this external donor compound is to affect the stereoselectivity of the catalyst system in polymerization of olefins having 3 or more carbon atoms, and is for this reason also called selectivity control agent.

As used herein, the term "hydrocarbyl" is a substituent containing hydrogen and carbon atoms, including linear or branched, saturated or unsaturated aliphatic radical, such as alkyl, alkenyl, and alkynyl; alicyclic radical, such as cycloalkyl, cycloalkenyl; aromatic radical, such as monocyclic or polycyclic aromatic radical, as well as combinations thereof, such as alkaryl and aralkyl.

As described therein, the term "substituted hydrocarbyl" is a hydrocarbyl group that is substituted with one or more non-hydrocarbyl substituent groups. A nonlimiting example of a non-hydrocarbyl substituent is a heteroatom. As used herein, a heteroatom is an atom other than carbon or hydrogen. Non-limiting examples of heteroatoms include: halogens (F, CI, Br, I), N, O, P, B, S and Si.

Preferably, R¹ is a selected from the group consisting of linear, branched and cyclic alkyl having at most 20 carbon atoms, preferably 1 to 10 carbon atoms or 3 to 10 carbon atoms, more preferably 1 to 6 carbon atoms. Suitable examples of R¹include methyl, ethyl, n-propyl, iso-propyl, n-butyl, iso-butyl, tert-butyl, sec-butyl, n-pentyl, iso-pentyl, cyclopentyl, n-hexyl and cyclohexyl. More preferably, R¹ is a linear alkyl having 1 to 10, even more preferably 1 to 6 carbon atoms. Most preferably, R¹ is methyl or ethyl.

Particularly, the L group has a single substituent on the nitrogen atom, this single substituent being a carbon atom which is doubly bonded to the nitrogen atom, which is also defined as the "imine carbon atom".

According to the invention, X and Y can also be each independently selected from a group comprising a heteroatom selected from 13, 14, 15, 16 or 17 groups of the IUPAC Periodic Table of the Elements, through which X and Y are each independently bonded to the imine carbon atom of Formula II, wherein the heteroatom is substituted with a group consisting of a linear, branched and cyclic alkyl having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl having 6 to 20 carbon atoms, optionally containing a heteroatom selected from group 13, 14, 15, 16 or 17 of the IUPAC Periodic Table of the Elements. Preferably, substituents X and Y are bonded to the imine carbon atom through a group 14, 15 or 16 atom according to the IUPAC Periodic Table of the Elements. More preferably, substituents X and Y are groups bonded to the imine carbon atom through carbon, silicon, nitrogen, phosphorous, oxygen or sulfur. Substituents X and Y are preferably independently selected from a group consisting of a hydrogen atom and silyl, amide, imide, alkoxy, thioalkoxy, phosphide and phosphinimide group of up to 20, for instance 1 to 10 carbon atoms.

More preferably, both substituents X and Y in the L group comprise a nitrogen atom through which X and Y are each bonded to the imine carbon atom. In such case, L is referred herein as a "guanidine" group.

According to the invention, X and Y may be each independently selected from a group consisting of a linear, branched and cyclic alkyl having at most 20 carbon atoms, optionally containing a heteroatom selected from group 13, 14, 15, 16 or 17 of the IUPAC Periodic Table of the Elements; and an aromatic substituted and unsubstituted hydrocarbyl having 6 to 20 carbon atoms, optionally containing a heteroatom selected from group 13, 14, 15, 16 or 17 of the IUPAC Periodic Table of the Elements.

Preferably, L group comprises a substituent X comprising a carbon atom by which X is bonded to the imine carbon atom and a substituent Y comprising a carbon atom by which Y is bonded to the imine carbon atom. In such case, L is referred herein as a "ketimide" group.

More preferably, L group comprises a substituent X comprising a carbon atom, by which X is bonded to the imine carbon atom and Y comprises a nitrogen atom, through which Y is bonded to the imine carbon atom. In such case, L is referred herein as an "amidine" group.

The substituents X and Y may also be linked to each other by a spacer group, which results in X and Y together with the imine carbon atom being part of a ring system. The spacer group may be any hydrocarbon group having 1 to 20 carbon atoms, such as -(CH2)ₙ-, with n being 1 to 20, preferably 1 to 10 carbon atoms and more preferably 1 to 6 carbon atoms. Most preferably, the spacer is an ethylene or propylene group, such as -(CH2)ₙ- with n being 2 or 3.

The present invention also relates to a compound having the structure according to Formula la:

Si (L)ₙ (OR¹)₄₋ₙ (Formula la),

wherein,
Si is a silicon atom with valency 4+;
O is an oxygen atom with valency 2- and O is bonded to Si via a silicon-oxygen bond; nis1,2or3;
R¹ is a selected from the group consisting of linear, branched and cyclic alkyl having at most 20 carbon atoms and aromatic substituted and unsubstituted hydrocarbyl having 6 to 20 carbon atoms;
L is a group represented by Formula II 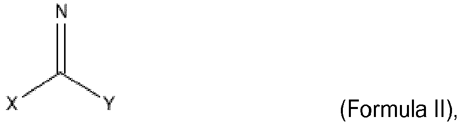 wherein,
L is bonded to the silicon atom via a nitrogen-silicon bond;
L has a single substituent on the nitrogen atom, where this single substituent is an imine carbon atom; and
X and Y are each independently selected from the group consisting of:
a) a hydrogen atom;
b) a group comprising a heteroatom selected from group 13, 14, 15, 16 or 17 of the IUPAC Periodic Table of the Elements, through which X and Y are each independently bonded to the imine carbon atom of Formula II, wherein the heteroatom is substituted with a group consisting of a linear, branched and cyclic alkyl having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl having 6 to 20 carbon atoms, optionally containing a heteroatom selected from group 13, 14, 15, 16 or 17 of the IUPAC Periodic Table of the Elements;
c) a linear, branched and cyclic alkyl having at most 20 carbon atoms, optionally containing a heteroatom selected from group 13, 14, 15, 16 or 17 of the IUPAC Periodic Table of the Elements; and
d) an aromatic substituted and unsubstituted hydrocarbyl having 6 to 20 carbon atoms, optionally containing a heteroatom selected from group 13, 14, 15, 16 or 17 of the IUPAC Periodic Table of the Elements..
   L and R¹ of Formula la are the same as L and R¹ as defined herein for Formula I.

The present invention also relates to a catalyst system comprising a Ziegler-Natta type procatalyst, a co-catalyst and the external electron donor of Formula la, as defined herein; and to a process to make a polyolefin by contacting an olefin with the catalyst system comprising the compound of Formula la as external donor. Furthermore, the compound of Formula la can be used as an external electron donor in a Ziegler-Natta type catalyst system for polymerization of an olefin.

The silane compounds according to Formula I and la can be synthesized by any methods known in the art, *e.g.* by reacting a metal salt of group L, such as of a ketimine, amidine or guanidine with Si(OR¹)₄ or (ZₙSi(OR²)₄₋ₙ) at different molar ratios, i.e. molar ratio of (metal salts of group L) / (Si(OR¹)₄) of 1, 2, 3, 4 or excess of metal salt of group L, preferably in a hydrocarbon dispersant or solvent, such as hexane, heptane, pentane, ethers at temperatures between -100°C and 80°C. The metal salt of group L may be synthesized in *situ* or isolated by deprotonating a neutral L of Formula II, such as ketimine, amidine or guanidine in a solvent, preferably a hydrocarbon solvent, such as hexane, heptane, pentane, preferably at reaction temperature between -100°C and 80°C. The deprotonating agent may be chosen from any of the list, which is known by the person skilled in the art. Non-limiting deprotonating agents are lithium diethylamide, n-butyl lithium, t-butyl lithium, methyl magnesium bromide, methyl magnesium chloride, methyl magnesium iodide, ethyl magnesium bromide, sodium hydride, lithium hydride, potassium carbonate and sodium carbonate.

For example, the metal salt of the ketimide can be synthesized by synthetic procedures, which are known from the prior art, *e.g.* a di-tert-butyl ketimide lithium compound can be synthesized according to a published procedure, D. Armstrong, D. Barr, R. Sanith, J. Chem. Soc. Dalton Trans. 1987, 1071. The metal salt of an amidine can be synthesized by synthetic procedures, which are known from the literature, *e.g.* by reacting an amide anion with a benzonitrile compound (US7956140B2) or the pinner reaction (EP2493906) followed by a deprotonation using a hydrocarbyl lithium or hydrocarbyl magnesium halide compound. The metal salt of a guanidine can be synthesized by synthetic procedures which are known from the literature, *e.g.* the 1,1,3,3-tetramethyl guanidine anion can be synthesized according to EP10214708 or Journal of the American Chemical Society, 93:7, April 7, 1971, 1502, J.C.S. Dalton (doi:10.1039/DT9720001501).

The metal salt of group L may remain in solution or precipitate from the solvent in which the reaction is performed. In case the metal salt of group L precipitates during the deprotonation reaction, the remaining solid metal salt of group L can be isolated by filtration and purified by multiple washings with additional solvent. In case the metal salt of group L remains in solution, the solution can be used further as such.

Compounds of the invention of Formula I or la may also be synthesized by reacting an alkoxy silane halide represented by Formula III with a metal salt of group L, such as a ketimine, amidine or guanidine preferably in a hydrocarbon dispersant or solvent, such as hexane, heptane, pentane, ethers at temperatures between -100 °C and 80 °C. The molar ratios of (metal salt of group L) / (ZₙSi(OR²)₄₋ₙ) in this reaction preferably equal n.

Alternatively, compounds of the invention of Formula I or la may also be synthesized by reacting a neutral L group of Formula IV, such as a ketimine, amidine or guanidine with an alkoxy silane halide of Formula III in the presence or in the absence of a base. Non-limiting examples of such bases used are triethyl amine, diethyl amine, DBU and tetraazacyclononane (Mironov, V. F. et al., Doklady Akademii Nauk. SSSR, 1971, 199(1), 103-106). The molar ratio that can be applied in the reaction of the neutral group L of Formula IV equals that of n in Formula III and the base can be use equimolar to that or, preferably, in excess. The reaction is preferably performed in a hydrocarbon dispersant or solvent, such as alkanes, aromatic solvents or ethereal solvents at temperatures between 25 °C and 150 °C. Non-limiting examples of solvents used are hexane, heptane, toluene, *p*-xylene, diethylether and tetrahydrofuran.

ZₙSi(OR²)₄₋ₙ (Formula III)

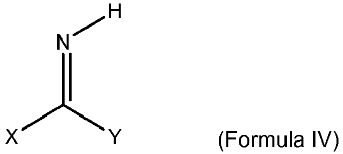

In the alkoxy silane halide represented by Formula III, Z is halogen group, and more preferably a chlorine group; n = 1, 2 or 3; R² is a hydrocarbon group with 1-4 carbon atoms, for example, methyl, ethyl or propyl groups, such as n-propyl, i-propyl, and butyl groups, such as n-butyl, i-butyl, s-butyl and t-butyl groups. The ethyl and methyl groups are especially preferred.

In the protonated L group represented by Formula IV, X and Y are defined the same as for the L group of Formula II.

Neutral compounds L of Formula IV can be synthesized through methods known in the art, e.g. Caron, Stephane et al., Journal of Organic Chemistry, 2010, 75(3), 945-947; Buchwald, S.L. et al., J. Org. Chem.2008, 73, 7102; Zuideveld, M.A. et al. US7956140B2; Kretschmer, W.P. et al., Chem. Commun., 608 and WO02/070569; Zuideveld, M.A. et al. P2319874; J. McMeeking et al. US6114481.

In some cases, the compound of Formula IV can be obtained as its hydrogen halide salt. Specific examples of halogen halides are hydrogen chloride, hydrogen bromide and hydrogen iodide. The neutral compound L-H can be obtained by reacting the hydrogen halide salt of L with a base.

In order to show the structural variety possible for L groups, non-exhaustive examples of L are represented by the following structures:

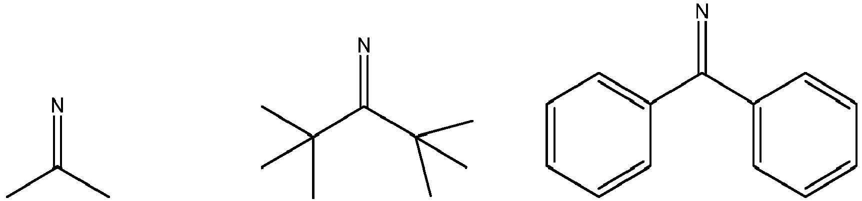

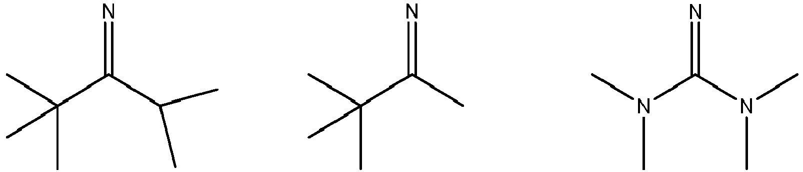

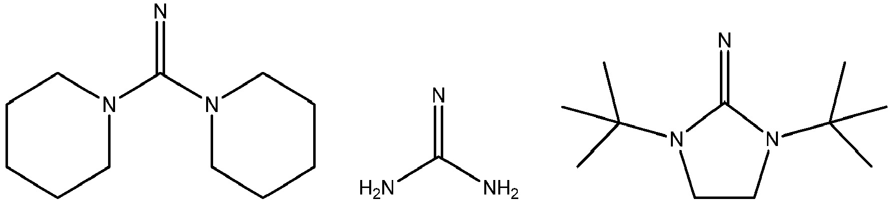

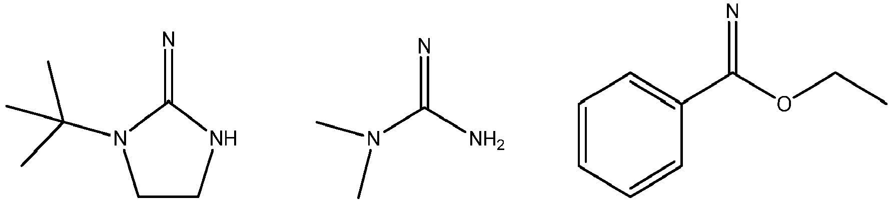

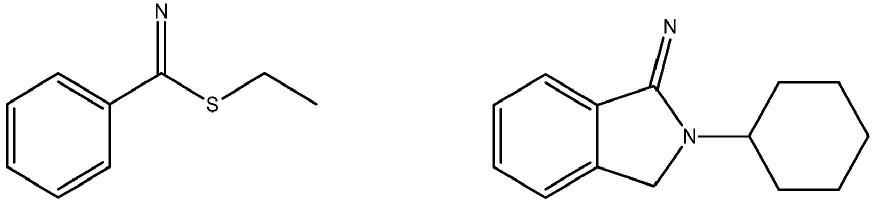

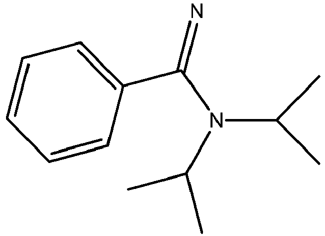

The catalyst system according to the present invention comprising the special silicon-based external electron donor as defined herein exhibits at least one of the following properties: improved activity, improved hydrogen response, improved ethylene response and reduced lump formation during polymerization. The catalyst system according to the present invention comprising the special external electron donor as defined herein allows producing olefin-based polymers with high isotacticity, high melt flow rate and high ethylene content in case the polyolefin is a propylene-ethylene copolymer.

The procatalyst in the catalyst system according to the present invention is a typical catalyst component of a Ziegler-Natta type of catalyst as known in the art, which typically comprises a transition metal containing solid catalyst compound; an organo-metal compound (co-catalyst) and optionally one or more electron donor compounds (external donors). The transition metal containing solid catalyst compound typically comprises a transition metal halide, *i.e.* titanium, chromium, vanadium halide that may be supported on a metal or metalloid compound, such as magnesium chloride or silica. Such procatalysts are already described in the prior art, for instance in documents WO96/32426A, WO2006/056338A1, EP1838741B1 and US5077357. Any Ziegler-Natta type support and any transition metal halide compounds known in the art can be used in the procatalyst of the catalyst composition according to the present invention. For instance, titanium-magnesium based procatalyst compositions with different magnesium-containing support-precursors, such as magnesium halides, magnesium alkyls and magnesium aryls, and also magnesium alkoxy and magnesium aryloxy compounds for polyolefin production, particularly of polypropylenes production are described in US4978648, WO96/32427A1 WO01/23441 A1, EP1283 222A1, EP1222 214B1; US5077357; US5556820; US4414132; US5106806 and US5077357 but the present composition is not limited to the disclosure in these documents.

The procatalyst may include a magnesium moiety. Suitable magnesium moieties include anhydrous magnesium chloride and/or its alcohol adduct, magnesium alkoxide or aryloxide, mixed magnesium alkoxy halide, and/or carboxylated magnesium dialkoxide or aryloxide. The magnesium moiety may be a magnesium dialkoxide, such as diethoxymagnesium.

The procatalyst may include a titanium moiety. Suitable titanium moieties include titanium alkoxides, titanium aryloxides, titanium alkoxy halides, and titanium halides.

The procatalyst may comprise (i) magnesium; (ii) a transition metal compound of an element from IUPAC Periodic Table groups 4 to 8; (iii) a halide, a carboxylate, an oxyhalide, and/or an alkoxide of (i) and/or (ii); (iv) an internal electron donor; and (v) combinations of (i), (ii), (iii), and (iv). Suitable procatalyst components include halides, oxyhalides, and alkoxides of magnesium, titanium, vanadium, chromium, molybdenum, zirconium, hafnium, and combinations thereof.

The procatalyst in the catalyst system according to the present invention may preferably comprise magnesium, titanium, a halogen and an internal electron donor.

As used herein, an "internal electron donor" or an "internal donor" is a compound added during formation of the procatalyst composition that donates a pair of electrons to one or more metals present in the resultant procatalyst composition. Not bounded by any particular theory, it is believed that the internal electron donor assists in regulating the formation of active sites thereby enhancing catalyst stereoselectivity.

The internal electron donor can be any compound known in the art to be used as internal electron donor. Suitable examples of internal donors include aromatic acid esters, aminobenzoates, diethers, silyl esters succinates and/or combinations thereof.

As used herein, an "aromatic acid ester" is a monocarboxylic acid ester or a polycarboxylic acid ester that includes Formula (V) as follows: 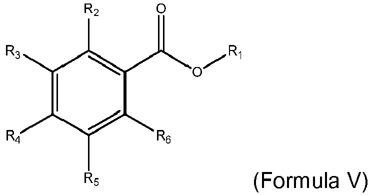 wherein R₁ may be selected from a hydrocarbyl having 1 to 10 carbon atoms, a substituted hydrocarbyl having 1 to 10 carbon atoms, a alkoxycarbonyl group, and a heteroatom or heteroatom-containing group. Suitable examples of hydrocarbyl groups include alkyl-, cycloalkyl-, alkenyl-, alkadienyl-, cycloalkenyl-, cycloalkadienyl-, aryl-, aralkyl, alkylaryl, and alkynyl- groups. The hydrocarbyl group of R₁ of Formula V can include a substituted- or unsubstituted- hydrocarbyl group having 1 to 10 carbon atoms. R₂-R₆ of the aromatic acid ester of Formula V can be the same or different, each being selected from hydrogen, a hydrocarbyl group having 1 to 10 carbon atoms, a substituted hydrocarbyl group having 1 to 10 atoms, a carboxylate having 1 to 10 carbon atoms, a heteroatom, and combinations thereof.

As used herein, "benzoic acid ester" is a monocarboxylic acid ester with the Formula VI below: 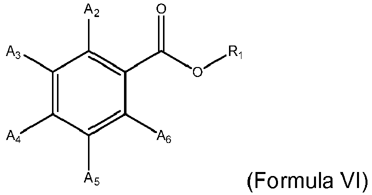 wherein R₁ may be the same as R₁ of Formula V. A₂-A₆ may be the same or different and each can be selected from hydrogen, a hydrocarbyl group having 1 to 10 carbon atoms, a substituted hydrocarbyl group having 1 to 10 atoms, a heteroatom, and combinations thereof. Suitable examples of benzoic acid esters include an alkyl p-alkoxybenzoate (such as ethyl p-methoxybenzoate, methyl p-ethoxybenzoate, ethyl p-ethoxybenzoate), an alkyl benzoate (such as ethyl benzoate, methyl benzoate), an alkyl p-halobenzoate (ethyl pchlorobenzoate, ethyl p-bromobenzoate), a benzoyl halide (such as benzoyl chloride), and benzoic anhydride. The benzoic acid ester is preferably selected from ethyl benzoate, benzoyl chloride, ethyl p-bromobenzoate, n-propyl benzoate and benzoic anhydride. The benzoic acid ester is more preferably ethyl benzoate.

As used herein, a "phthalic acid ester" refers to a polycarboxylic acid ester with the Formula VII below. 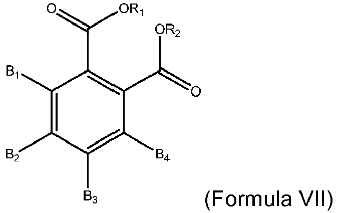 wherein R₁ and R₂ can be the same or different and each is selected from a hydrocarbyl having 1 to 10 carbon atoms and a substituted hydrocarbyl group having 1 to 10 carbon atoms. B₁ - B₄ can be the same or different and each is selected from hydrogen, a hydrocarbyl group having 1 to 10 carbon atoms, a substituted hydrocarbyl group having 1 to 10 atoms, a heteroatom, and combinations thereof. Suitable examples of phthalic acid esters include dimethyl phthalate, diethyl phthalate, di-n-propyl phthalate, diisopropyl phthalate, din-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, bis(2,2,2-trifluoroethyl) phthalate, diisobutyl 4-t-butylphthalate, and diisobutyl 4-chlorophthalate. The phthalic acid ester is preferably diisobutyl phthalate.

The aromatic acid ester may include acyl halides or anhydrides. Benzoyl chloride can be used alone or in combination with ethyl benzoate. Phthaloyl chloride and/or phthalic anhydride can be used to replace phthalate.

The di-ether may be a dialkyl di-ether compound represented by the Formula VIII, 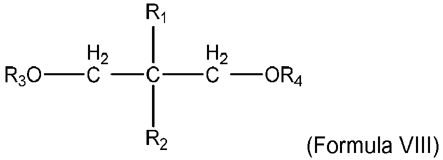 wherein R₁ to R₄ can be independently of one another alkyl, aryl or aralkyl group having up to 20 carbon atoms, which may optionally contain a group 14, 15, 16, or 17 heteroatom, provided that R₁ and R₂ may be a hydrogen atom. The dialkylether may be linear or branched, and may include one or more of the following groups: alkyl, cycloaliphatic, aryl, alkylaryl or aryl alkyl radicals with 1-18 carbon atoms, and hydrogen. Suitable examples of dialkyl diether compounds include dimethyl diether, diethyl diether, dibutyl diether, methyl ethyl diether, methyl butyl diether, methyl cyclohexyl diether, 2,2-dimethyl-1,3-dimethoxypropane, 2,2-diethyl-1,3-dimethoxypropane, 2,2-di-n-butyl-1,3-dimethoxypropane, 2,2-diiso-butyl-1,3-dimethoxypropane, 2-ethyl-2-n-butyl-1,3-dimethoxypropane, 2-n-propyl-2-cyclopentyl-1,3-dimethoxypropane, 2,2-dimethyl-1,3-diethoxypropane, 2-n-propyl-2-cyclohexyl-1,3-diethoxypropane, 2-(2-ethylhexyl)-1,3-dimethoxypropane, 2-isopropyl-l,3-dimethoxypropane, 2-n-butyl-1,3 -dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenyllethyl)-1,3-dimethoxypropane, 2-(2-cyclohexylethyl)-1 ,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-di-npropyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimethoxypropane, 2-methyl-2-phenyl-1,3-dimethoxypropane, 2-methyl-2-cyclohexyl-1,3-dimethoxypropane, 2,2-bis(pchlorophenyl)-1,3-dimethoxypropane, 2,2-bis(2-cyclohexylethyl)-1,3 -dimethoxypropane, 2-methyl-2-iso butyl-1,3 -dimethoxypropane, 2-methyl-2-(2-ethylhexyl)-1,3 -dimethoxy propane, 2-methyl-2-isopropyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diiso butyl-1,3 - diethoxypropane, 2,2-diisobuty 1-1,3 -di -n-butoxypropane, 2-iso butyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3, 7-dimethyloctyl) 1,3-dimethoxypropane, 2,2-diisopropyl-1,3-dimethoxypropane, 2-isopropyl-2-cyclohexylmethyl-1,3 -dimethoxypropane, 2,2-diisopentyl-1,3 -dimethoxypropane, 2-isopropyl-2-cyclohexyl-1,3-dimethoxypropane, 2-isopropyl-2-cyclopentyl-1,3-dimethoxypropane, 2,2-dicylopentyl-1,3-dimethoxypropane, 2-n-heptyl-2-n-pentyl-1 ,3-dimethoxypropane, 9,9-bis( methoxymethyl)fluorene, 1,3 -dicyclohexyl-2,2-bis(methoxymethyl)propane, 3,3-bis(methoxymethyl)-2,5-dimethylhexane, or any combination of the foregoing. In an embodiment, the internal electron donor is 1,3-dicyclohexyl-2,2-bis(methoxymethyl)propane, 3 ,3-bis(methoxymethyl)-2,5-dimethylhexane, 2,2-dicyclopentyl-1,3-dimethoxypropane and combinations thereof.

The silyl ester as internal donor can be any silyl ester known in the art, for instance as disclosed in US61/117,820.

The internal electron donor may be also a mixed internal electron donor as disclosed in US61/117,763, the entire content of which is incorporated by reference herein.

The procatalyst may have a titanium content of from about 0.1 wt% to about 6.0 wt%, based on the total solids weight, or from about 1.0 wt% to about 4.5 wt%, or from about 1.5 wt% to about 3.5 wt%. The weight ratio of titanium to magnesium in the solid procatalyst composition may be between about 1:3 and about 1:160, or between about 1:4 and about 1:50, or between about 1:6 and 1:30. Weight percent is based on the total weight of the procatalyst composition.

The magnesium to internal electron donor molar ratio may be from about 100:1 to about 1:1, or from about 30:1 to about 2:1, or from about 15:1 to about 3:1.

The procatalyst composition may be produced by any method known in the art. For instance, the procatalyst may be produced by way of halogenation which converts a procatalyst precursor and the internal electron donor into a combination or a complex of a magnesium moiety and a titanium moiety into which the internal electron donor is incorporated. The magnesium moiety and the titanium moiety may be any respective magnesium or titanium moiety as disclosed herein. The procatalyst may also be produced as disclosed in WO96/32426A; this document discloses a 3-step process for producing a catalyst for the polymerization of an olefin, wherein in the first two steps a compound Mg(OAlk)ₓCl_{y} of certain morphology is prepared, and subsequently this solid Mg-compound is contacted with titanium tetrachloride, and an internal electron-donating compound, which is dibutyl phthalate. The procatalyst may also be produced as disclosed in WO96/32426A; this document discloses a process for the polymerization of propylene using a catalyst comprising a catalyst component obtained by a process wherein a compound with formula Mg(OAlk)ₓCl_{y} wherein x is larger than 0 and smaller than 2, y equals 2-x and each Alk, independently, represents an alkyl group, is contacted with a titanium tetraalkoxide and/or an alcohol in the presence of an inert dispersant to give an intermediate reaction product and wherein the intermediate reaction product is contacted with titanium tetrachloride in the presence of an internal donor, which is dibutyl phthalate.

Preferably, the Ziegler-Natta type procatalyst in the catalyst system according to the present invention is obtained by the process as described in WO07134851A1, the entire content of which is incorporated by reference herein. Particularly, said process comprises the steps of i) contacting a compound R⁴_{z}MgX_{2-z} wherein R⁴ is an organic group, X is a halide, and z is larger than 0 and smaller than 2, with an alkoxy- or aryloxy-containing silane compound to give a solid magnesium-containing compound of formula Mg(OR¹)ₓX₂₋ₓ wherein x is larger than 0 and smaller than 2, and each R¹, independently, represents an alkyl group or an aryl group; ii) contacting the solid Mg(OR¹)ₓX₂₋ₓ with at least one activating compound selected from the group formed by electron donors and compounds of formula M(OR²)_{v-w}(OR³)_{w}, wherein M is Ti, Zr, Hf ,Al or Si or M(OR²)_{v-w}(R³)_{w}, wherein M is Si, each R² and R³, independently, represent an alkyl, alkenyl or aryl group, v is the valency of M and w is smaller than v, and preferably with an inert dispersant to give an intermediate reaction product, and iii) contacting the intermediate reaction product with a halogen-containing Ti-compound and optionally with an internal donor to obtain a catalyst system. This process (may be also referred hereinafter as "the preferred process") results in catalyst systems with high hydrogen and/or ethylene sensitivity that allow obtaining polyolefins, particularly polypropylene homopolymer and propylene-based copolymers with low lump formation.

In step i) of the preferred process, a solid magnesium-containing support is prepared by contacting a compound or a mixture of compounds of formula R⁴_{z}MgX_{2-z} wherein R⁴ is an organic group, X is a halide, and z is larger than 0 and smaller than 2, with an alkoxy- or aryloxy-containing silane compound, as for example described in WO 96/32427 A1 and WO 01/23441 A1. In the compound R⁴_{z}MgX_{2-z}, also referred to as Grignard compound, X is preferably chlorine or bromine, more preferably chlorine. The organic group R⁴ can be an aliphatic or aromatic group, preferably containing from 1 up to 20 carbon atoms. R⁴ can be an alkyl, aryl, aralkyl, alkoxide, phenoxide, etc., or mixtures thereof. Suitable examples of group R⁴ are methyl, ethyl, n-propyl, i-propyl, n-butyl, i-butyl, t-butyl, hexyl, cyclohexyl, octyl, phenyl, tolyl, xylyl, mesityl and benzyl. R⁴ preferably represents an aromatic group, for instance a phenyl group or an alkyl group, such as n-butyl. The Grignard compound of formula R⁴_{z}MgX_{2-z}, wherein z is larger than 0 and smaller than 2, is preferably characterized by z being from about 0.5 to 1.5.

It is explicitly noted that it is possible that the Grignard compound in step i) may alternatively have a different structure, for example, may be complex, e.g. z may not necessarily be an integer. Such complexes are already known to the skilled person in the art; a particular example of such complexes is Phenyl₄Mg₃Cl₂.

The alkoxy- or aryloxy-containing silane used in step i) is preferably a compound or a mixture of compounds with the general formula Si (OR⁵)₄₋ₙ R⁶ₙ, wherein n can range from 0 up to 4, preferably n is from 0 up to and including 1, and wherein each R⁵ and R⁶ groups, independently, represent an alkyl, alkenyl or aryl group, optionally containing one or more hetero atoms for instance O, N, S or P, with, for instance, 1-20 C-atoms, as defined below for R² and R³. Examples of suitable silane-compounds include tetramethoxysilane, tetraethoxysilane, methyltrimethoxysilane, methyltributoxysilane, ethyltriethoxysilane, phenyltriethoxysilane, diethyldiphenoxysilane, n-propyltriethoxysilane, diisopropyldimethoxysilane, diisobutyldimethoxysilane, n-propyltrimethoxysilane, cyclohexylmethyldimethoxysilane, dicyclopentyldimethoxysilane, isobutylisopropyldimethoxylsilane, phenyltrimethoxysilane, diphenyldimethoxysilane, trifluoropropylmethyldimethoxysilane, bis(perhydroisoquinolino)dimethoxysilane, dicyclohexyldimethoxysilane, dinorbornyldimethoxysilane, di(n-propyl)dimethoxysilane, di(iso-propyl)dimethoxysilane, di(n-butyl)dimethoxysilane and/or di(iso-butyl)dimethoxysilane. Preferably, tetraethoxysilane is used as silane-compound in preparing the solid Mg-containing compound in the preferred process. Preferably, in step i) the silane-compound and the Grignard compound are introduced simultaneously to a mixing device to result in particles of advantageous morphology, especially of the larger particles, as described in WO 01/23441 A1. Here, 'morphology' does not only refer to the shape of the particles of the solid Mg-compound and the catalyst made therefrom, but also to the particle size distribution (also characterized as span), its fines content, powder flowability, and the bulk density of the catalyst particles. Moreover, it is well known that a polyolefin powder produced in polymerization process using a catalyst system based on such catalyst component has a similar morphology as the catalyst component (the so-called "replica effect"; see for instance S. van der Ven, Polypropylene and other Polyolefins, Elsevier 1990, p. 8-10). Accordingly, almost round polymer particles are obtained with a length/diameter ratio (I/D) smaller than 2 and with good powder flowability.

Introduced simultaneously means that the introduction of the first reaction product and the silane-compound is done in such way that the molar ratio Mg/Si does not substantially vary during the introduction of these compounds to the mixing device, as described in WO 01/23441 A1.

The silane-compound and Grignard compound can be continuously or batch-wise introduced to the mixing device. Preferably, the both compounds are introduced continuously to a mixing device. The mixing device can have various forms; it can be a mixing device in which the silane-compound is premixed with the Grignard compound, the mixing device can also be a stirred reactor, in which the reaction between the compounds takes place. Preferably, the compounds are premixed before the mixture is introduced to the reactor for step i). In this way a catalyst component is formed with a morphology that leads to polymer particles with the best morphology (high bulk density, narrow particle size distribution, (virtually) no fines, excellent flowability).

The Si/Mg molar ratio during step i) may vary within wide limits for instance from 0.2 to 20. Preferably, the Si/Mg molar ratio is from 0.4 to 1.0.

The period of premixing in above indicated reaction step may vary between wide limits, for instance 0.1 to 300 seconds. Preferably premixing is performed during 1 to 50 seconds. The temperature during the premixing step is not specifically critical, and may for instance range between 0 and 80°C; preferably the temperature is between 10 °C and 50°C.

The reaction between said compounds may, for instance, take place at a temperature between -20°C and 100°C; preferably at a temperature of from 0°C to 80°C. The solid product obtained from the reaction between the silane-compound and the Grignard compound, is usually purified by rinsing with an inert solvent, for instance a hydrocarbon solvent with for example 1-20 C-atoms, like pentane, iso-pentane, hexane or heptane. The solid product can be stored and further used as a suspension in said inert solvent. Alternatively, the product may be dried, preferably partly dried, and preferably under mild conditions; e.g. at ambient temperature and pressure.

In the solid magnesium-containing compound of formula Mg(OR¹)ₓX₂₋ₓ, the group R¹ generally is an alkyl containing 1-12 carbon atoms or an aryl having 6 to 12 carbon atoms, for example a phenyl group. The alkyl group may be linear or branched. Preferably, the R¹ group contains 1-8 carbon atoms. More preferably, at least one of the R¹-groups represents an ethyl group. In a preferred embodiment, each R¹-group represents an ethyl group.

The solid magnesium-containing compound is reacted in step ii) with at least one activating compound selected from the group formed by electron donors and compounds of formula M(OR²)_{v-w}(OR³)_{w}, wherein M is Ti, Zr, Hf, Al or Si or M(OR²)_{v-w}(R³)_{w}, wherein M is Si, each R² and R³, independently, represent an alkyl, alkenyl or aryl group, v is the valency of M and w is smaller than v.

Examples of suitable electron donors that may be used in step ii) are known to the skilled person and described herein below, i.e. include carboxylic acids, carboxylic acid anhydrides, carboxylic acid esters, carboxylic acid halides, alcohols, ethers, ketones, amines, amides, nitriles, aldehydes, alkoxides, sulphonamides, thioethers, thioesters and other organic compounds containing one or more hetero atoms, such as nitrogen, oxygen, sulphur and/or phosphorus.

Suitable carboxylic acids may be aliphatic or (partly) aromatic, Examples include formic acid, acetic acid, propionic acid, butyric acid, isobutanoic acid, acrylic acid, methacrylic acid, maleic acid, fumaric acid, tartaric acid, cyclohexanoic monocarboxylic acid, cis-1,2-cyclohexanoic dicarboxylic acid, phenylcarboxylic acid, toluenecarboxylic acid, naphthalene carboxylic acid, phthalic acid, isophthalic acid, terephthalic acid and/or trimellitic acid.

Anhydrides of the aforementioned carboxylic acids can be mentioned as examples of carboxylic acid anhydrides, such as for example acetic acid anhydride, butyric acid anhydride and methacrylic acid anhydride.

Suitable examples of esters of above-mentioned carboxylic acids are formates, for instance, butyl formate; acetates, for instance ethyl acetate and butyl acetate; acrylates, for instance ethyl acrylate, methyl methacrylate and isobutyl methacrylate; benzoates, for instance methylbenzoate and ethylbenzoate; methyl-p-toluate; ethyl-naphthate and phthalates, for instance monomethyl phthalate, dibutyl phthalate, diisobutyl phthalate, diallyl phthalate and/or diphenyl phthalate.

Examples of suitable carboxylic acid halides are the halides of the carboxylic acids mentioned above, for instance acetyl chloride, acetyl bromide, propionyl chloride, butanoyl chloride, butanoyl iodide, benzoyl bromide, p-toluyl chloride and/or phthaloyl dichloride.

Suitable alcohols are linear or branched aliphatic alcohols with 1-12 C-atoms, or aromatic alcohols. Examples include methanol, ethanol, butanol, isobutanol, hexanol, xylenol and benzyl alcohol. The alcohols may be used alone or in combination. Preferably, the alcohol is ethanol or hexanol.

Examples of suitable ethers are diethyl ether, dibutyl ether, diisoamyl ether, anisole and ethylphenyl ether, 2,2-diisobutyl-1,3-dimethoxypropane, 2,2-dicyclopentyl-1,3-dimethoxypropane, 2-ethyl-2-butyl-1,3-dimethoxypropane, 2-isopropyl-2-isopentyl-1,3-dimethoxypropane and/or 9,9-bis(methoxymethyl) fluorene. Also, cyclic ethers like tetrahydrofuran (THF), or tri-ethers can be used.

Suitable examples of other organic compounds containing a heteroatom include 2,2,6,6-tetramethyl piperidine, 2,6-dimethylpiperidine, pyridine, 2-methylpyridine, 4-methylpyridine, imidazole, benzonitrile, aniline, diethylamine, dibutylamine, dimethylacetamide, thiophenol, 2-methyl thiophene, isopropyl mercaptan, diethylthioether, diphenylthioether, tetrahydrofuran, dioxane, dimethylether, diethylether, anisole, acetone, triphenylphosphine, triphenylphosphite, diethylphosphate and/or diphenylphosphate.

The R² and R³ groups in the activating compounds formulas can be a linear, branched or cyclic alkyl or alkenyl group, suitable groups contain from 1 to 20 carbon atoms, preferably 1-12 or 1-8 carbon atoms. The groups may differ independently, or be the same. In preferred embodiments R² and R³ are ethyl, propyl or butyl; more preferably all groups are ethyl groups. R² and R³ can also be aromatic hydrocarbon groups, optionally substituted with e.g. alkyl groups, and can contain for example from 6 to 20 carbon atoms.

The R² and R³ groups may optionally contain one or more hetero atoms, such as for instance O, N, S or P.

Preferably, M in said activating compound is Ti or Si. Si-containing compounds suitable as activating compounds are the same as listed above for step i).

The value of w is preferably 0, the activating compound being for example a titanium tetraalkoxide containing 4-32 C-atoms. The four alkoxide groups in the compound may be the same or may differ independently. Preferably, at least one of the alkoxy groups in the compound is an ethoxy group. More preferably the compound is a tetraalkoxide, like titanium tetraethoxide.

In the preferred process to prepare the procatalyst, one activating compound can be used, but also a mixture of two or more compounds may be used.

A combination of a compound of M(OR²)_{v-w}(OR³)_{w}, wherein M is Ti, Zr, Hf, Al or Si or M(OR²)_{v-w}(R³)_{w}, wherein M is Si, as defined above, with an electron donor is preferred as activating compound to obtain a catalyst system that for example shows high activity, and of which the ethylene sensitivity can be affected by selecting the internal donor; which is specifically advantageous in preparing copolymers of for example propylene and ethylene.

Preferably, a Ti-based compound, for example titanium tetraethoxide, is used together with an alcohol, like ethanol or hexanol, or with an ester compound, like ethylacetate, ethylbenzoate or a phthalate ester, or together with an ether, like dibutylether, or with pyridine.

If two or more activating compounds are used in the preferred process, their order of addition is not critical, but may affect catalyst performance depending on the compounds used. A skilled person may optimise their addition based on some experiments. The compounds can be added together, or sequentially. For example, a carboxylic acid ester may be added before, during or after the treatment with a titanium tetraalkoxide or a combination thereof can be applied.

Preferably, an electron donor compound is first added to the compound with formula Mg(OR¹)ₓX₂₋ₓ where after a compound of formula M(OR²)_{v-w}(OR³)_{w} or M(OR²)_{v-w}(R³)_{w} as defined herein above is added. The activating compounds preferably are added slowly, for instance during a period of 0.1-6, preferably during 0.5-4 hours, most preferably during 1-2.5 hours, each.

The inert dispersant is preferably a hydrocarbon solvent. Any substance known in the art that is inert to the Mg-containing support particles may be used as inert dispersant. The dispersant may be for example an aliphatic or aromatic hydrocarbon with 1-20 C-atoms. Preferably, the dispersant is an aliphatic hydrocarbon, more preferably pentane, iso-pentane, hexane or heptane, heptane being most preferred.

The molar ratio of the activating compound to Mg(OR¹)ₓX₂₋ₓ may range between wide limits and is, for instance, between 0.02 and 1.0. Preferably the molar ratio is between 0.05 and 0.5, more preferably between 0.06 and 0.4, or even between 0.07 and 0.2.

The temperature in step ii) can be in the range from -20°C to 70°C, preferably from -10°C to 50°C, more preferably in the range from -5°C to 40°C, and most preferably in the range between 0°C and 30°C.

Preferably, at least one of the reaction components is dosed in time, for instance during 0.1 to 6, preferably during 0.5 to 4 hours, more particularly during 1-2.5 hours.

The obtained solid intermediate product can be further washed, preferably with the solvent also used as inert dispersant; and then stored and further used as a suspension in said inert solvent. Alternatively, the product may be dried, preferably partly dried, preferably slowly and under mild conditions; e.g. at ambient temperature and pressure.

Starting from a solid Mg-containing product of controlled morphology, said morphology is not negatively affected during treatment with the activating compound. The solid intermediate product obtained is considered to be an adduct of the Mg-containing compound and the at least one activating compound and is still of controlled morphology. This intermediate reaction product is subsequently contacted with a halogen-containing titanium compound in step iii), and preferably at least one internal electron donor compound in one or more steps.

Preferably, the preferred process to make the procatalyst is characterized in that a solid compound with formula Mg(OR¹)ₓX₂₋ₓ wherein x is larger than 0 and smaller than 2, and each R¹, independently, represents an alkyl group with 1-8 carbon atoms and X is a halogen, is contacted with a carboxylic acid ester and a titanium tetraalkoxide, an alcohol and an inert dispersant to give a solid intermediate reaction product, which intermediate reaction product is then contacted with titanium tetrachloride and an internal donor.

Suitable compounds that can be used as internal electron donor are known to the skilled person, and are the same as the electron donors as defined herein above for step ii) of the preferred process. Preferably, dibutyl phthalate is used as the internal electron donor, more preferably di-n-butyl phthalate.

The Ti/Mg molar ratio in the contact between the intermediate product and halogen-containing titanium compound preferably is between 10 and 100, most preferably, between 10 and 50.

The molar ratio of the internal electron donor relative to the magnesium during the treatment of the intermediate product with the titanium tetrachloride may vary between wide limits, for instance between 0.05 and 0.75. Preferably this molar ratio is between 0.1 and 0.4.

During contacting the intermediate product and the halogen-containing titanium compound, an inert dispersant is preferably used. The dispersant preferably is chosen such that virtually all side products formed are dissolved in the dispersant. Suitable dispersants include for example aliphatic and aromatic hydrocarbons and halogenated aromatic solvents with for instance 4-20 C-atoms. Examples include toluene, xylene, benzene, heptane, o-chlorotoluene and chlorobenzene.

The reaction temperature during contacting in step iii) the intermediate product and the halogen-containing titanium compound is preferably between 0°C and 150°C, more preferably between 50°C and 150°C, and most preferably between 60°C and 120°C. At higher or lower temperatures the activity of a catalyst system prepared from the procatalyst component prepared according to this process becomes lower. The obtained reaction product is purified, usually with an inert aliphatic or aromatic hydrocarbon or halogenated aromatic compound, to obtain the catalyst component of the invention. If desired the reaction and subsequent purification steps may be repeated one or more times. A final washing is preferably performed with an aliphatic hydrocarbon to result in a suspended or at least partly dried catalyst component, as described above for the other steps.

The catalyst system according to the present invention includes a co-catalyst. As used herein, a "co-catalyst" is a term well-known in the art in the field of Ziegler-Natta catalysts and is recognized to be a substance capable of converting the procatalyst to an active polymerization catalyst. Generally, the co-catalyst is an organometallic compound containing a metal from group 1, 2, 12 or 13 of the Periodic System of the Elements (Handbook of Chemistry and Physics, 70th Edition, CRC Press, 1989- 1990). The co-catalyst may include any compounds known in the art to be used as "co-catalysts", such as hydrides, alkyls, or aryls of aluminum, lithium, zinc, tin, cadmium, beryllium, magnesium, and combinations thereof. The co-catalyst may be a hydrocarbyl aluminum co-catalyst represented by the formula R₃Al, wherein each R is an alkyl, cycloalkyl, aryl, or hydride radical; at least one R is a hydrocarbyl radical; two or three R radicals can be joined in a cyclic radical forming a heterocyclic structure; each R can be the same or different; and each R, which is a hydrocarbyl radical, has 1 to 20 carbon atoms, and preferably 1 to 10 carbon atoms. Each alkyl radical can be straight or branched chain and such hydrocarbyl radical can be a mixed radical, *i.e*., the radical can contain alkyl, aryl, and/or cycloalkyl groups. Nonlimiting examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, methylnapthyl, cyclohexyl, cycloheptyl, and cyclooctyl.

Suitable examples of hydrocarbyl aluminum compounds as co-catalyst include triisobutylaluminum, trihexylaluminum, di-isobutylaluminum hydride, dihexylaluminum hydride, isobutylaluminum dihydride, hexylaluminum dihydride, diisobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. In an embodiment, the cocatalyst is selected from triethylaluminum, triisobutylaluminum, trihexylaluminum, di-isobutylaluminum hydride and dihexylaluminum hydride.

The co-catalyst can also be a hydrocarbyl aluminum compound represented by the formula RₘAlX₃₋ₘ wherein m = 1 or 2, R is an alkyl, and X is a halide or alkoxide. Non-limiting examples of suitable compounds include tetraethyldialuminoxane, methylaluminoxane, isobutylaluminoxane, tetraisobutyldialuminoxane,diethylaluminum ethoxide, diisobutylaluminum chloride, methylaluminum dichloride, diethylaluminum chloride, ethylaluminum dichloride and dimethylaluminum chloride.

Preferably, the co-catalyst is triethylaluminum. The molar ratio of aluminum to titanium may be from about 5:1 to about 500:1 or from about 10:1 1 to about 200:1 or from about 15:1 to about 150:1 or from about 20:1 to about 100:1. The molar ratio of aluminum to titanium is preferably about 45:1.

The external electron donor according to the present invention consists of only the compound of Formula I or la or the external electron donor comprises the compound of Formula I or la and an additional compound.

The additional compound(s) in the external donor according to the invention may be one or more alkoxysilanes. The alkoxysilane compound can have any of the structures disclosed herein. The alkoxysilane is described by Formula IX

SiRᵣ(OR')₄₋ᵣ (Formula IX)

where R independently is hydrogen or a hydrocarbyl or an amino group optionally substituted with one or more substituents containing one or more Group 14, 15, 16, or 17 heteroatoms of the IUPAC Periodic Table of the Elements, said R containing up to 20 atoms, apart from hydrogen and halogen; R' is a C1-20 alkyl group; and r is 0, 1, 2 or 3. In an embodiment, R is C6-12 aryl, alkyl or aralkyl, C3-12 cycloalkyl, C3-12 branched alkyl, or C3-12 cyclic or acyclic amino group, R' is C1-4 alkyl, and r is 1 or 2. Suitable examples of such silane compositions include dicyclopentyldimethoxysilane, di -tert-butyldimethoxysilane, ethylcyclohexyldimethoxysilane, methylcyclohexyldiethoxysilane, diphenyldimethoxysilane, diiso butyl dimethoxysilane, diisopropyl dimethoxysilane, diisobutyldiethoxysilane, ethylcyclohexyldimethoxysilane, di-n-propyldimethoxysilane, di-n-butyldimethoxysilane, cyclopentyltrimethoxysilane, isopropyltrimethoxysilane, n-propyltrimethoxysilane, n-propyltriethoxysilane, ethyltriethoxysilane, tetramethoxysilane, tetraethoxysilane, diethylaminotriethoxysilane, cyclopentylpyrrolidinodimethoxysilane, bis(pyrrolidino) dimethoxysilane, bis(perhydroisoquinolino)dimethoxysilane, and dimethyldimethoxysilane. In an embodiment, the alkoxysilane is dicyclopentyldimethoxysilane, thylcyclohexyldimethoxysilane, n-propyltrimethoxysilane and any combination thereof. Preferably, the additional external donor is dicyclopentyldimethoxysilane.

The external donor of the present invention may include from about 0.1 mol % to about 99.9% mol % of the silane represented by Formula I and from about 99.9 mol % to about 0.1 mol % of the additional alkoxysilane.

The Si/Ti molar ratio in the catalyst system can range from 0.1 to 40, preferably from 0.1 to 20, even more preferably from 1 to 20 and most preferably from 2 to 10.

The invention also relates to a process to make the catalyst system by contacting a Ziegler-Natta type procatalyst, a co-catalyst and an external electron donor comprising the compound according to Formula I. The procatalyst, the cocatalyst and the external donor can be contacted in any way known to the skilled person in the art; and as also described herein.

The invention further relates to a process for making a polyolefin by contacting an olefin with the catalyst system according to the present invention. The procatalyst, the cocatalyst, the external donor and the olefin can be contacted in any way known to the skilled person in the art; and as also described herein. For instance, the external donor in the catalyst system according to the present invention can be complexed with the co-catalyst and mixed with the procatalyst composition (pre-mix) prior to contact between the catalyst composition and the olefin. The external donor can also be added independently to the polymerization reactor. The procatalyst composition, the cocatalyst, and the external donor can be mixed or otherwise combined prior to addition to the polymerization reactor.

Contacting the olefin with the catalyst system according to the present invention can be done under standard polymerization conditions, known to the skilled person in the art. As used herein, "polymerization conditions" are temperature and pressure parameters within a polymerization reactor suitable for promoting polymerization between the catalyst composition and an olefin to form the desired polymer. The polymerization process may be a gas phase, a slurry or a bulk polymerization process, operating in one or more than one reactor. One or more olefin monomers can be introduced in a polymerization reactor to react with the catalyst composition and to form an olefin-based polymer (or a fluidized bed of polymer particles).

In the case of polymerization in a slurry (liquid phase), a dispersing agent is present. Suitable dispersing agents include for example propane, n-butane, isobutane, n-pentane, isopentane, hexane, heptane, octane, cyclohexane, benzene, toluene, xylene, liquid propylene and/or mixtures thereof. The polymerization such as for example the polymerization temperature and time, monomer pressure, avoidance of contamination of catalyst, choice of polymerization medium in slurry processes, the use of further ingredients (like hydrogen) to control polymer molar mass, and other conditions are well known to persons of skill in the art. The polymerization temperature may vary within wide limits and is, for example for propylene polymerization, between 0 °C and 120 °C, preferably between 40 °C and 100 °C. The pressure during (propylene) (co)polymerization is for instance between 0.1 and 6 MPa, preferably between 0.5-3 MPa.

The molar mass of the polyolefin obtained during the polymerization can be controlled by adding hydrogen or any other agent known to be suitable for the purpose during the polymerization. The polymerization can be carried out in a continuous mode or batch-wise. Slurry-, bulk-, and gas-phase polymerization processes, multistage processes of each of these types of polymerization processes, or combinations of the different types of polymerization processes in a multistage process are contemplated herein. Preferably, the polymerization process is a single stage gas phase process or a multistage, for instance a two-stage gas phase process, wherein in each stage a gas-phase process is used.

Examples of gas-phase polymerization processes include both stirred bed reactors and fluidized bed reactor systems; such processes are well known in the art. Typical gas phase olefin polymerization reactor systems typically comprise a reactor vessel to which an olefin monomer(s) and a catalyst system can be added and which contain an agitated bed of growing polymer particles.

As used herein, "gas phase polymerization" is the way of an ascending fluidizing medium, the fluidizing medium containing one or more monomers, in the presence of a catalyst through a fluidized bed of polymer particles maintained in a fluidized state by the fluidizing medium optionally assisted by mechanical agitation. "Fluidization," "fluidized," or "fluidizing" is a gas-solid contacting process in which a bed of finely divided polymer particles is elevated and agitated by a rising stream of gas optionally assisted by mechanical stirring. Fluidization occurs in a bed of particulates when an upward flow of fluid through the interstices of the bed of particles attains a pressure differential and frictional resistance increment exceeding particulate weight. Thus, a "fluidized bed" is a plurality of polymer particles suspended in a fluidized state by a stream of a fluidizing medium. A "fluidizing medium" is one or more olefin gases, optionally a carrier gas (such as H₂ or N₂) and optionally a liquid (such as a hydrocarbon) which ascends through the gas-phase reactor.

A typical gas-phase polymerization reactor (or gas phase reactor) include a vessel *(i.e.*, the reactor), the fluidized bed, a product discharge system and may include a mechanical stirrer, a distribution plate, inlet and outlet piping, a compressor, a cycle gas cooler or heat exchanger. The vessel may include a reaction zone and may include a velocity reduction zone, which is located above the distribution plate. The bed may be located in the reaction zone. The fluidizing medium may include propylene gas and at least one other gas such as an olefin and/or a carrier gas such as hydrogen or nitrogen. The contacting can occur by way of feeding the catalyst composition into the polymerization reactor and introducing the olefin into the polymerization reactor. In an embodiment, the process includes contacting the olefin with a co-catalyst. The co-catalyst can be mixed with the procatalyst composition (pre-mix) prior to the introduction of the procatalyst composition into the polymerization reactor. The co-catalyst may be also added to the polymerization reactor independently of the procatalyst composition. The independent introduction of the co-catalyst into the polymerization reactor can occur (substantially) simultaneously with the procatalyst composition feed.

The olefin according to the invention may be selected from mono- and di-olefins containing from C2 to C20 carbon atoms. Suitable olefin monomers include alpha-olefins, such as ethylene, propylene, C4-C20 alpha-olefins, such as 1-butene, 1-pentene, 1-hexene, 4-methyl-1-pentene, 1-heptene, 1-octene, 1-decene, 1-dodecene and the like; C4-C20 diolefins, such as 1,3-butadiene, 1,3-pentadiene, norbornadiene, 5-vinyl-2-norbornene (VNB), 1,4-hexadiene, 5-ethylidene-2-norbornene (ENB) and dicyclopentadiene; C8-C40 vinyl aromatic compounds including styrene, o-, m- and p-methylstyrene, divinylbenzene, vinylbiphenyl, vinylnapthalene; and halogen-substituted C8-C40 vinyl aromatic compounds such as chlorostyrene and fluorostyrene.

Preferably, the olefin is propylene or a mixture of propylene and ethylene, to result in a propylene-based polymer, such as propylene homopolymer or propylene-olefin copolymer. The olefin may an alpha-olefin having up to 10 carbon atoms, such as ethylene, butane, hexane, heptane, octene. A propylene copolymer is herein meant to include both so-called random copolymers which typically have relatively low comonomer content, e.g. up to 10 mol%, as well as so-called impact PP copolymers or heterophasic PP copolymers comprising higher comonomer contents, e.g. from 5 to 80 mol%, more typically from 10 to 60 mol%. The impact PP copolymers are actually blends of different propylene polymers; such copolymers can be made in one or two reactors and can be blends of a first component of low comonomer content and high crystallinity, and a second component of high comonomer content having low crystallinity or even rubbery properties. Such random and impact copolymers are well-known to the skilled in the art. A propylene-ethylene random copolymer may be produced in one reactor. Impact PP copolymers may be produced in two reactors: polypropylene homopolymer may be produced in a first reactor; the content of the first reactor is subsequently transferred to a second reactor into which ethylene (and optionally propylene) is introduced. This results in production of a propylene-ethylene copolymer *(i.e*. an impact copolymer) in the second reactor.

The present invention also relates to a polyolefin, preferably a propylene-based polymer obtained or obtainable by a process as described herein above, comprising contacting propylene or a mixture of propylene and ethylene with a catalyst system according to the present invention, wherein the polypropylene-based polymer has a lump content of below 10 wt%, preferably below 4 wt% and more preferably below 3 wt%. The "lump content" represents the weight percentage of the total isolated polymer weight which does not pass through a sieve with pores smaller than 2.8 mm. The propylene-based polymer may be a propylene homopolymer or a mixture of propylene and ethylene. Such propylene-based polymers are known to the skilled person in the art; they are also described herein above.

The invention also relates to a polyolefin, particularly a propylene-based polymer having a lump content of below 10 wt%, preferably below 4 wt% and more preferably below 3 wt%.

The propylene-based polymer obtained according to the present invention can have a melt flow rate (MFR) from about 0.01 g/10 min to about 2000 g/10 min, or from about 0.01 g/10 min to about 1000 g/10 min; or from about 0.1 g/10 min to about 500 g/10 min, or from about 0.5 g/10 min to about 150 g/10 min, or from about 1 g/10 min to about 100 g/10 min. The propylene-based polymer obtained by applying the catalyst system according to the present invention can have a xylene solubles content from about 0.5 wt% to about 10 wt%, or from about 1 wt% to about 8 wt%, or from about 1 wt% to about 5 wt%.

The propylene-based polymer may be obtained at production rate from about 1 kg/g/hr to about 100 kg/g/hr, or from about 10 kg/g/hr to about 40 kg/g/hr. As used herein, "production rate" refers to the kilograms of polymer produced per gram of catalyst composition consumed in the polymerization reactor per hour.

The polyolefin, preferably the propylene-based polymer according to the present invention may further comprise additives, such as nucleating agents, clarifiers, stabilizers, release agents, pigments, dyes, plasticizers, anti-oxidants, antistatics, scratch resistance agents, high performance fillers, impact modifiers, flame retardants, blowing agents, recycling additives, coupling agents, anti microbials, anti-fogging additives, slip additives, anti-blocking additives, polymer processing aids such as lubricants and the like, etc., surface tension modifiers, co-agents, for example 1, 4-butanediol dimethacrylate, acrylate or methacrylate; components that enhance interfacial bonding between the polymer and the talc, for example maleated polypropylene etc. Such additives are well known in the art. The skilled person can readily select any suitable combination of additives and additive amounts without undue experimentation. The amount of additives depends on their type and function. Typically, their amounts will be from 0 to 30wt%, for example from 0 to 20 wt%, for example from 0 to 10 wt% or from 0 to 5 wt% based on the total composition. The sum of all components added in a process to form the polyolefins, preferably the propylene-base polymers or compositions thereof should add up to 100 wt%.

The invention also relates to the use of the polyolefins, preferably the propylene-based polymers according to the invention in injection moulding, blow moulding, extrusion moulding, compression moulding, thin-walled injection moulding, etc, for example in food contact applications.

Furthermore, the invention relates to a shaped article comprising the polyolefin, preferably the propylene-based polymer according to the present invention.

The polyolefin, preferably the propylene-based polymer according to the present invention may be transformed into shaped (semi)-finished articles using a variety of processing techniques. Examples of suitable processing techniques include injection moulding, injection compression moulding, thin wall injection moulding, extrusion, and extrusion compression moulding. Injection moulding is widely used to produce articles such as for example caps and closures, batteries, pails, containers, automotive exterior parts like bumpers, automotive interior parts like instrument panels, or automotive parts under the bonnet. Extrusion is for example widely used to produce articles, such as rods, sheets, films and pipes. Thin wall injection moulding may for example be used to make thin wall packaging.

It is noted that the invention relates to all possible combinations of features recited in the claims. Features described in the description may further be combined.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will be further elucidated with the following examples without being limited hereto.

### Examples

### Synthesis of Si (L)ₙ (OR¹)₄₋ₙ compounds

1,1,3,3-Tetramethylguanidine, tetraethoxysilane, tert-butyl lithium, trimethylacetonitrile were purchased at Sigma-Aldrich and used as purchased. Ketimines, amidines and guanidines were synthesized according to literature procedures.

### Compound A: Synthesis of 1,1,1-triethoxy-N-(2,2,4,4-tetramethylpentan-3-ylidene) silanamine

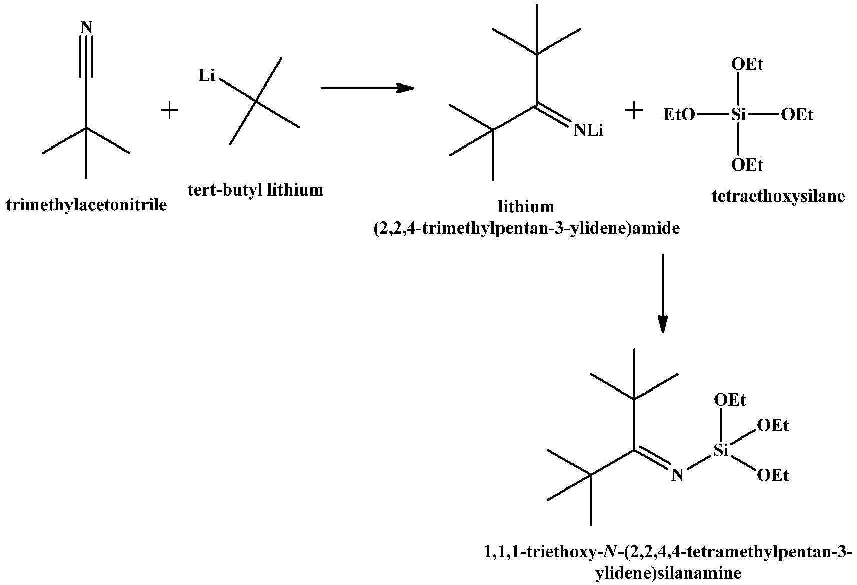

A solution of trimethylacetonitrile (7.5 g, 0.090 mol) in 150 ml n-heptane was added to a 1.3 M solution of t-butyl-lithium in n-pentane (91 mL, 0.81 mole) at - 10 °C over 1 hr. The reaction mixture was stirred for 2 hr at 0 to -50 °C to give a pale yellow solution of lithium (2,2,4,4-tetramethylpentan-3-ylidene)amide. The solution was cooled to -10 °C and tetraethoxysilane (28.1 gm, 0.135 mol) was added over 15 min, while slowly rising the temperature to 10°C. The reaction mixture was quenched using 25 mL of a saturated ammonium chloride solution in water. The organic layer was separated and dried over sodium sulfate. The solvents were removed *in vacuo.* The remaining crude oil (16.0 g) was distilled at 120 °C /2 mbar to obtain 4.9 g of 1,1,1-triethoxy-N-(2,2,4,4-tetramethylpentan-3-ylidene)silanamine (yield, 20 %; purity, 93 %); clear colorless liquid; GC-MS (Cl), 304.12 (m+1); ¹H NMR (300 MHz, CDCl₃) δ = 1.20-1.23 (t, 9H), 1.25 (d, 18H), 3.81-3.87 (q, 6H); ¹³C NMR (75.4 MHz, CDCl₃) δ = 195.0, 77.3, 77.0, 76.7, 58.9, 45.3, 30.3, 18.2 ppm.

### Compound B: 1,1,1-trimethoxy-/V-(2,2,4,4-tetramethylpentan-3-ylidene) silanamine

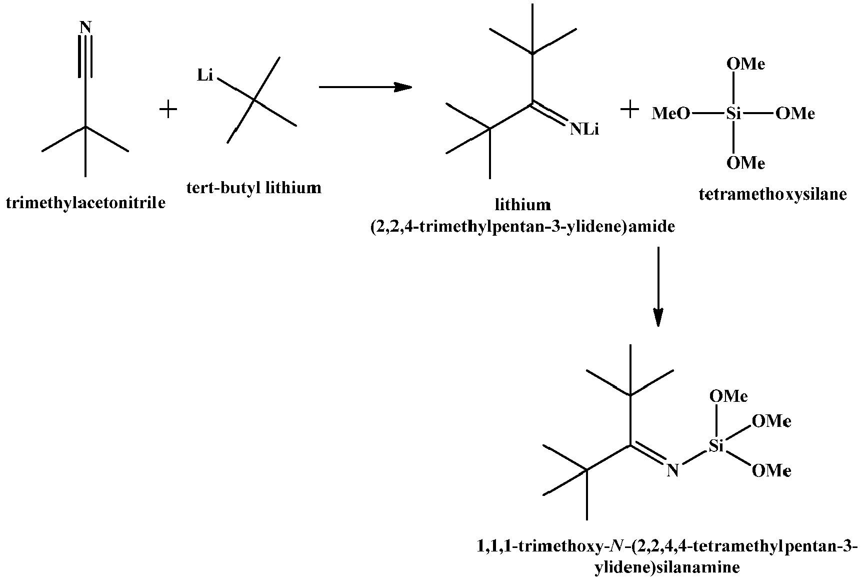

A solution of trimethylacetonitrile (7.5 g, 0.090 mole) in 150 ml n-heptane was added to a 1.3 M solution of t-butyl-lithium in n-pentane (100.0 mL, 0.09 mole) at-60 °C over 1 hr. The reaction mixture was stirred for 2 hr at -30 to -50 °C to give a pale yellow solution of lithium (2,2,4,4-tetramethylpentan-3-ylidene)amide. The reaction mixture was cooled to -60 °C and tetramethoxysilane (27.4 g, 0.180 mole) was added over 15 min, while slowly rising the temperature to 10°C. The reaction mixture was quenched using 25 mL of a saturated ammonium chloride solution in water. The organic layer was separated and dried over sodium sulfate. The solvents were removed *in vacuo.* The remaining crude oil (20.0 g) was distilled at 110 °C /2 mbar to obtain 6.5 g 1,1,1-trimethoxy-*N*-(2,2,4,4-tetramethylpentan-3-ylidene)silanamine (yield, 27 %; purity, 93.7 %); clear colorless liquid; GC-MS (Cl), 261.98 (m+1), 203.92, 141.21; ¹H NMR (400 MHz, CDCl₃) δ = 1.24-1.27 (d, 9H), 3.59-3.60 (d, 18H); ¹³C NMR (100.6 MHz, CDCl3) δ = 196.4, 51.2, 45.5, 30.4 ppm.

### Compound C: N,N,N',N'-tetramethylguanidine triethoxysilane

To a solution of N,N,N',N'-tetramethylguanidine (5.0 g, 0.043 mol) in 40 ml of hexane a 2.5 M solution of n-butyl-lithium (17.4 ml, 0.043 mol) was added at -78°C. A white precipitate was observed immediately upon addition. The mixture was subsequently allowed to heat up to room temperature by removing the cooling bath and stirred for an additional 30 minutes. The obtained suspension was slowly added to a solution of tetraethoxysilane (9.7 ml, 0.043 mol) in 50 ml hexane at -78°C, 40 ml of extra hexane was used to transfer the slurry to the reaction mixture. The reaction mixture was allowed to slowly heat up to room temperature and was stirred overnight. The suspension was filtered and the solvent in the obtained residue was removed under a nitrogen flow. The remaining crude oil was distilled at 130 °C/ 0.34 mbar to obtain 8.9 g of N,N,N',N'-tetramethylguanidine triethoxysilane (yield, 74%; purity, 99+%); clear colorless liquid; ¹H NMR (300 MHz, CDCl₃) δ = 1.11-1.06 (t, 9H), 2.67 (s, 12H), 3.70-3.72 (q, 6H); ¹³C NMR (75.4 MHz, CDCl₃) δ = 161, 59, 40, 19 ppm.

### Synthesis of the procatalyst component

### A. Grignard formation step

A stirred flask, fitted with a reflux condenser and a funnel, was filled with magnesium powder (24.3 g). The flask was brought under nitrogen. The magnesium was heated at 80 °C for 1 hour, after which dibutyl ether (DBE, 150 ml), iodine (0.03 g) and n-chlorobutane (4 ml) were successively added. After the colour of the iodine had disappeared, the temperature was raised to 80 °C and a mixture of n-chlorobutane (110 ml) and dibutyl ether (750 ml) was slowly added for 2.5 hours. The reaction mixture was stirred for another 3 hours at 80° C. Then the stirring and heating were stopped and the small amount of solid material was allowed to settle for 24 hours. By decanting the colorless solution above the precipitate, a solution of butylmagnesiumchloride (reaction product of step A) with a concentration of 1.0 mol Mg/l was obtained.

### B. Preparation of the intermediate reaction product

250 mL of dibutyl ether was introduced to a 1 L reactor fitted with a propeller stirrer and two baffles. The reactor was thermostated at 35 °C and the stirrer speed was kept at 200 rpm. Then a cooled (to 15 °C) 360 mL solution of the Grignard reaction product as prepared in A and 180 ml of a cooled (to 15 °C) solution of tetraethoxysilane (TES) in dibutyl ether (consisting of 38ml of TES and 142 ml of DBE) were dosed into the reactor for 400 min. with preliminary mixing in a minimixer of 0.15 ml volume, which was cooled to 15 °C by means of cold water circulating in the minimixer jacket. The premixing time was 18 seconds in the minimixer and the connecting tube between the minimixer and the reactor. The stirring speed in the minimixer was 1000 rpm. On the dosing completion, the reaction mixture was kept at 35 °C. for 0.5 hours. Then the reactor was heated to 60 °C and kept at this temperature for 1 hour. Then the stirrer was stopped and the solid substance was allowed to settle. The supernatant was removed by decanting. The solid substance was washed three times using 300 ml of heptane. As a result, a white solid reaction product was obtained and suspended in 200 ml of heptane.

Under an inert nitrogen atmosphere at 20°C a 250 ml glass flask equipped with a mechanical agitator is filled with a slurry of 5 g of the reaction product of step B dispersed in 60 ml of heptane. Subsequently a solution of 0.86 ml methanol (MeOH/Mg=0.5 mol) in 20 ml heptane is dosed under stirring during 1 hour. After keeping the reaction mixture at 20°C for 30 minutes the slurry was slowly allowed to warm up to 30°C for 30 min and kept at that temperature for another 2 hours. Finally the supernatant liquid is decanted from the solid reaction product which was washed once with 90 ml of heptane at 30°C.

### C. Preparation of the procatalyst component

A reactor was brought under nitrogen and 125 ml of titanium tetrachloride was added to it. The reactor was heated to 90 °C and a suspension, containing about 5.5 g of the support obtained in step C in 15 ml of heptane, was added to it under stirring. The reaction mixture was kept at 90 °C for 10 min. Then ethyl benzoate was added (EB/Mg=0.15 molar ratio). The reaction mixture was kept for 60 min. Then the stirring was stopped and the solid substance was allowed to settle. The supernatant was removed by decanting, after which the solid product was washed with chlorobenzene (125 ml) at 90°C for 20 min. The washing solution was removed by decanting, after which a mixture of titanium tetrachloride (62.5 ml) and chlorobenzene (62.5 ml) was added. The reaction mixture was kept at 90°C for 30 min. After which the stirring was stopped and the solid substance was allowed to settle. The supernatant was removed by decanting, after which a mixture of titanium tetrachloride (62.5 ml) and chlorobenzene (62.5 ml) was added. Then di-n-butyl phthalate (DNB) (DNB/Mg=0.15 molar ratio) in 3 ml of chlorobenzene was added to reactor and the temperature of reaction mixture was increased to 115°C. The reaction mixture was kept at 115°C for 30 min. After which the stirring was stopped and the solid substance was allowed to settle. The supernatant was removed by decanting, after which a mixture of titanium tetrachloride (62.5 ml) and chlorobenzene (62.5 ml) was added. The reaction mixture was kept at 115°C for 30 min , after which the solid substance was allowed to settle. The supernatant was removed by decanting and the solid was washed five times using 150 ml of heptane at 60°C, after which the procatalyst component, suspended in heptane, was obtained.

### Propylene-ethylene co-polymerization

All polymerization experiments were performed using a magnesium / titanium / chloride containing catalyst which was prepared according to EP1838741 B.

The copolymerization of propylene and ethylene was carried out in a stainless steel reactor with a volume of 1800 mL. The co-catalyst (TEA) and procatalyst component synthesised according to the procedure described above (steps A to C) and the external electron donor were dosed as heptane solutions or slurries to the reactor (Al/Titanium molar ratio = 50 and Si/Ti ratio = 4.5), which is under a nitrogen atmosphere, while the reactor temperature is maintained below 30 °C. Subsequently, the reactor was pressurized using a set ratio of propylene, ethylene and hydrogen, and the temperature and pressure were raised to its setpoint (60 °C and 20 barg). After the pressure setpoint has been reached, the polymerization was continued for 75 minutes. During the polymerization reaction the gas cap composition of propylene, ethylene and hydrogen was controlled using mass flow meters and online-GC control. After reaching the polymerization time the reactor was depressurized and cooled to ambient condtitions. The propylene-ethylene random copolymer so obtained was removed from the reactor and stored in aluminium bags.

### Polymer analysis

Polymer yield is expressed as total mass of polymer isolated from the reactor.

Catalyst yield is expressed as kilogram of polymer isolated per gram of catalyst after the 75 minutes of polymerization time.

MFI is the melt flow rate as measured at 230 °C with 2.16 kg load, measured according to ISO 1133.

C2 content is expressed as weight percentage of ethylene incorporated into the total polymer weight obtained and measured with FT-IR. The FT-IR method was calibrated using NMR data.

Lump content is the weight percentage of the total isolated polymer weight which does not pass through a sieve with pores smaller than 2.8 mm.

H₂/C₃ is the percentage of hydrogen over propylene in the gas cap of the reactor.

C₂/C₃ is the percentage of ethylene over propylene in the gas cap of the reactor.

XS, wt% is xylene soluble fraction of the isolated polymer, measured according to ASTM D 5492-10.

Mw/Mn: Polymer molecular weight and its distribution (MWD) were determined on a Waters 150 °C gel permeation chromatograph combined with a Viscotek 100 differential viscosimeter. The chromatograms were run at 140 °C using 1,2,4-trichlorobenzene as a solvent with a flow rate of 1 ml/min. The refractive index detector was used to collect the signal for molecular weights.

### Results of the polymerization experiments

The following propylene-ethylene co-polymerization experiments were performed using the following reactor conditions:

The results are shown in Table 1.

**Table 1.**

| Exp. | External donor | H₂/C₃ | C₂/c₃ | Polymer yield | Catalyst yield | MFI | C2 content | Lump content | XS |
|---|---|---|---|---|---|---|---|---|---|
| | | Vol.% | Vol.% | (gram) | Kg/g | g/10 min | wit. % | Wt.% | wt% |
| 1 | Compound A | 3.1 | 1.7 | 255 | 20.7 | 23.8 | 4.2 | 2.8 | 11.7 |
| 2 | Compound B | 3.2 | 1.7 | 287 | 25.3 | 16.1 | 7.1 | 9.0 | 7.6 |

## Claims

1. A catalyst system comprising a Ziegler-Natta type procatalyst, a co-catalyst and an external electron donor, wherein the external electron donor comprises a compound having the structure according to Formula I:
Si (L)ₙ(OR¹)₄₋ₙ (Formula I),
wherein,
Si is a silicon atom with valency 4+;
O is an oxygen atom with valency 2- and O is bonded to Si via a silicon-oxygen bond; n is 1, 2, 3 or 4;
R¹ is a selected from the group consisting of linear, branched and cyclic alkyl having at most 20 carbon atoms and aromatic substituted and unsubstituted hydrocarbyl having 6 to 20 carbon atoms;
L is a group represented by Formula II 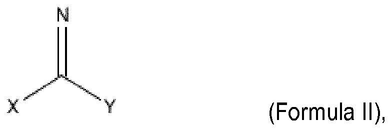 wherein,
L is bonded to the silicon atom via a nitrogen-silicon bond;
L has a single substituent on the nitrogen atom, where this single substituent is an imine carbon atom; and
X and Y are each independently selected from the group consisting of:
a) a hydrogen atom;
b) a group comprising a heteroatom selected from group 13, 14, 15, 16 or 17 of the IUPAC Periodic Table of the Elements through which X and Y are each independently bonded to the imine carbon atom of Formula II, wherein the heteroatom is substituted with a group consisting of a linear, branched and cyclic alkyl groups having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl groups having 6 to 20 carbon atoms, optionally containing a heteroatom selected from group 13, 14, 15, 16 or 17 of the IUPAC Periodic Table of the Elements;
c) a linear, branched and cyclic alkyl having at most 20 carbon atoms, optionally containing a heteroatom selected from group 13, 14, 15, 16 or 17 of the IUPAC Periodic Table of the Elements; and
d) an aromatic substituted and unsubstituted hydrocarbyl having 6 to 20 carbon atoms, optionally containing a heteroatom selected from group 13, 14, 15, 16 or 17 of the IUPAC Periodic Table of the Elements.

2. The catalyst system according to claim 1, wherein L is guanidine, amidine or ketimide.

3. The catalyst system according to claim 1, wherein R¹ is an alkyl having at most 10 carbon atoms.

4. A process to make the catalyst system according to anyone of the preceding claims, comprising contacting a Ziegler-Natta type procatalyst, a co-catalyst and an external electron donor comprising the compound according to Formula I.

5. The process according to claim 4, which comprises the steps of:
i) contacting a compound R⁴_{z}MgX_{2-z} wherein R⁴ is an organic group, X is a halide, and z is larger than 0 and smaller than 2, with an alkoxy- or aryloxy-containing silane compound to give a solid magnesium-containing compound of formula Mg(OR¹)ₓX₂₋ₓ wherein x is larger than 0 and smaller than 2, and each R¹, independently, represents an alkyl group or an aryl group;
ii) contacting the solid Mg(OR¹)ₓX₂₋ₓ with at least one activating compound selected from the group formed by electron donors and compounds of formula M(OR²)_{v- w}(OR³)_{w}, wherein M is Ti, Zr, Hf, Al or Si or M(OR²)_{v-w}(R³)_{w}, wherein M is Si, each R² and R³, independently, represent an alkyl, alkenyl or aryl group, v is the valency of M and w is smaller than v to give an intermediate reaction product;
iii) contacting the intermediate reaction product with a halogen-containing Ti-compound and optionally with an internal donor to form a Ziegler-Natta type procatalyst; and
iv) contacting the Ziegler-Natta type procatalyst with a co-catalyst and an external electron donor according to Formula I to form the catalyst system according to anyone of claims 1 to 3.

6. The process according to claim 5, wherein Mg(OR¹)ₓX₂₋ₓ is contacted in step ii) with titanium tetraalkoxide and an alcohol as activating compounds.

7. The process according to anyone of claims 4 to 6, wherein the co-catalyst is a hydrocarbyl aluminum compound represented by the formula RₘAlX₃₋ₘ wherein m = 1 or 2, R is an alkyl, and X is a halide or alkoxide.

8. A process for making a polyolefin by contacting an olefin with the catalyst system according to anyone of claims 1 to 3.

9. The process according to claim 8, wherein propylene or a mixture of propylene and ethylene is contacted with the catalyst system according to anyone of claims 1 to 3.

10. A polyolefin obtainable by the process according to anyone of claims 8 or 9, wherein the polyolefin has a lump content below 10 wt%, preferably below 4 wt% and more preferably below 3 wt%.

11. A polyolefin having a lump content below 10 wt%, preferably below 4 wt% and more preferably below 3 wt%.

12. The polyolefin according to claim 10 or 11, wherein the polyolefin is a propylene-based polymer.

13. A shaped article comprising the polyolefin according to anyone of claims 10 to 12.

14. A compound having the structure according to Formula I:
Si (L)ₙ (OR¹)₄₋ₙ (Formula la),
wherein,
Si is a silicon atom with valency 4+;
O is an oxygen atom with valency 2- and O is bonded to Si via the silicon-oxygen bond;
n is 1, 2 or 3;
R¹ is a selected from the group consisting of linear, branched and cyclic alkyl having at most 20 carbon atoms and aromatic substituted and unsubstituted hydrocarbyl having 6 to 20 carbon atoms;
L is a group represented by Formula II 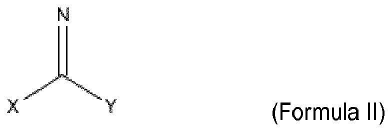 wherein,
L is bonded to the silicon atom via the nitrogen-silicon bond;
L has a single substituent on the nitrogen atom, where this single substituent is an imine carbon atom; and
X and Y are each independently selected from the group consisting of
a) a hydrogen atom;
b) a group comprising a heteroatom selected from group 13, 14, 15, 16 or 17 of the IUPAC Periodic Table of the Elements, through which X and Y are each independently bonded to the imine carbon atom of Formula II, wherein the heteroatom is substituted with a group consisting of a linear, branched and cyclic alkyl having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl having 6 to 20 carbon atoms, optionally containing a heteroatom selected from group 13, 14, 15, 16 or 17 of the IUPAC Periodic Table of the Elements;
c) a linear, branched and cyclic alkyl having at most 20 carbon atoms, optionally containing a heteroatom selected from group 13, 14, 15, 16 or 17 of the IUPAC Periodic Table of the Elements; and
d) an aromatic substituted and unsubstituted hydrocarbyl having 6 to 20 carbon atoms, optionally containing a heteroatom selected from group 13, 14, 15, 16 or 17 of the IUPAC Periodic Table of the Elements.

15. Use of the compound having the structure according to Formula I or la according to anyone of claims 1 to 3 and 13 as an external electron donor in a Ziegler-Natta type catalyst system for polymerization of an olefin.
